Europäisches Patentamt

European Patent Office

Office européen des brevets

(11) Publication number: **0 248 123**
**B1**

## EUROPEAN PATENT SPECIFICATION

(45) Date of publication of patent specification: **28.09.88**

(51) Int. Cl.⁴: **F 42 B 13/32**

(21) Application number: **86301884.2**

(22) Date of filing: **14.03.86**

(54) Spring for self-erecting fins.

(43) Date of publication of application:
**09.12.87 Bulletin 87/50**

(45) Publication of the grant of the patent:
**28.09.88 Bulletin 88/39**

(84) Designated Contracting States:
**CH DE FR IT LI NL SE**

(56) References cited:
**DE-C-2 342 783**
**GB-A-1 352 118**

(73) Proprietor: **BRITISH AEROSPACE PUBLIC LIMITED COMPANY**
**100 Pall Mall**
**London SW1Y 5HR (GB)**

(72) Inventor: **Titley, Mark Craig Brits. Aerospace Publ. Ltd. Co.**
**Stevenage 'A' Six Hills Way**
**Stevenage Hertfordshire SG1 2AS (GB)**

(74) Representative: **Dowler, Edward Charles et al British Aerospace Public Limited Company Corporate Patents Department Brooklands Road Weybridge Surrey, KT13 OSJ (GB)**

Courier Press, Leamington Spa, England.

## Description

This invention relates to springs and spring arrangements for deploying a plurality of movable members from respective first positions to respective second positions, for example, deploying the fins of a projectile from their respective stowed positions to their respective operative positions.

It is known to use springs to deploy the steering fins of a projectile. Normally, one or more spring members are used to deploy each fin and then a separate latching mechanism is used on each fin to latch the deployed fin into its operating position. Known methods of fin deployment tend to be costly in both materials (in the form of components) and assembly time as each fin-deployment system has to be assembled separately.

According to a first aspect of the invention, there is provided a fin deployment spring made from a single piece of spring material and comprising a first portion adapted for being engaged with a body from which a plurality of fins are to be deployed in radial directions, and a plurality of second portions each operable to exert a spring force in a respective direction radially outwards with respect to the first portion for deploying a respective one of said fins.

The spring may comprise a plurality of third portions operable for exerting spring force in respective radially inward directions upon said body while said first portion is engaged therewith.

According to a second aspect of the invention, there is provided an integral spring arrangement for mounting on a body which arrangement comprises a plurality of spring portions for erecting a plurality of members from respective stowed positions to respective operating positions radially with respect to said body and for latching said members into their respective operating positions, the spring arrangement further comprising spring portions operable for locking the arrangement into a predetermined radial position on said body.

For a better understanding of the invention, reference will now be made, by way of example, to the accompanying drawings in which:—

Figure 1 is a sectional side elevation of a spring arrangement for deploying fins mounted on a projectile;

Figure 2 is a sectioned side elevation of the spring arrangement only; and

Figure 3 is a plan view of a blank which may be used to form the Figure 2 arrangement.

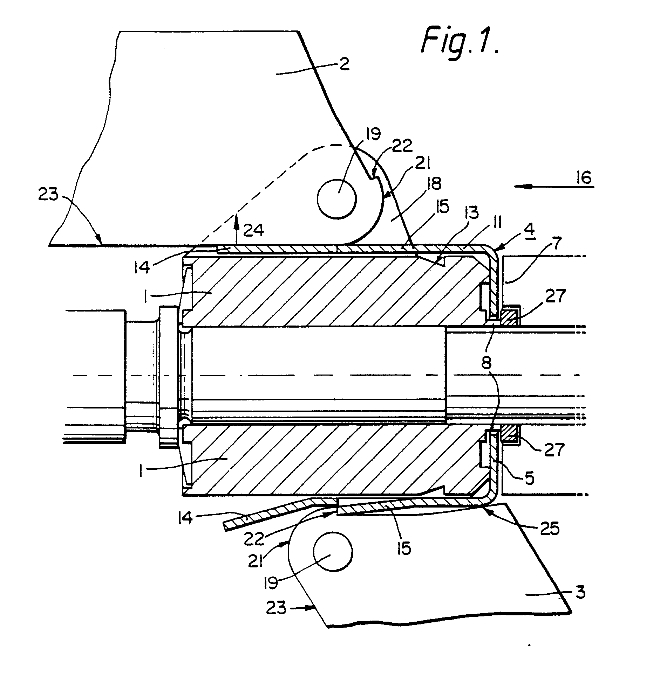

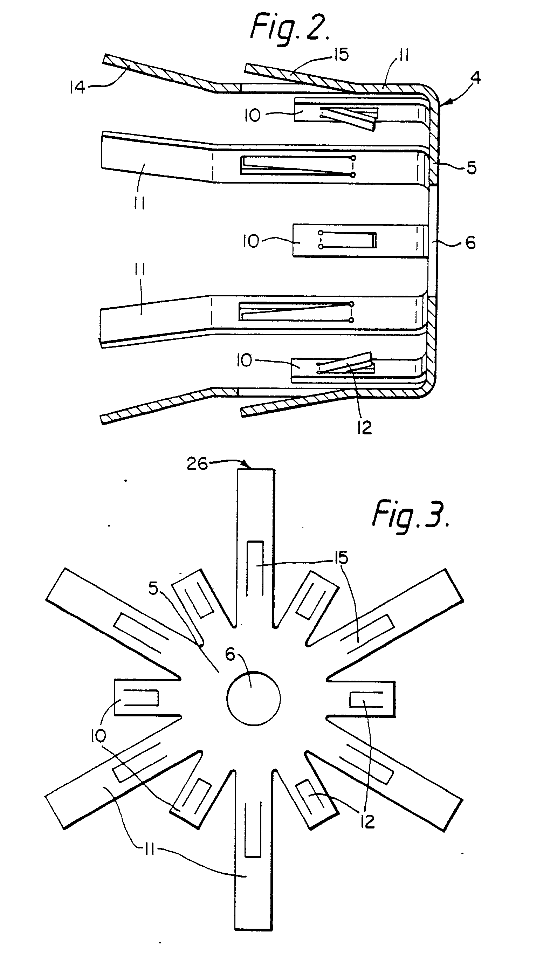

Figure 1 shows part of a barrel-launched projectile which comprises a rotatable hub 1 carrying six flight control fins (only two of which, 2 and 3, can be seen). The control fins are equally-spaced around the hub 1 and each fin is pivotably connected to the hub 1 so that it can move from a stowed position aligned with the axis of the projectile, to an operative position. The fin 2 is shown in the stowed position while fin 3 is shown deployed. Deployment of the fins is effected by a spring arrangement 4 which is also shown in Figure 2. The spring arrangement 4 comprises an annular portion 5 which defines a central hole 6, and which is positioned between one end of the hub 1 and an adjacent non-rotating part 7 of the projectile body, with the hole 6 engaged around a short reduced-diameter extension 8 of this end of the hub 1. From respective positions spaced around the periphery of the annular portion 5 of the spring arrangement 4, a series of twelve projecting arms extend alongside the hub 1 generally parallel to the projectile axis. Alternate ones of the arms, the arms 10, are shorter than the other arms 11, and are formed with respective radially inwardly extending barbs 12. These barbs 12 engage with an annular V-shaped groove 13 formed around the hub 1, when the spring arrangement 4 has been fitted over the hub 1. The longer arms 11 are aligned with respective ones of the fins. The end portion 14 and an intermediate tongue or flap portion 15 of each of the arms 11 are bent outwardly.

The spring arrangement 4 is positioned by being pushed onto the hub 1 in the direction of the arrow 16. As the arrangement 4 is pushed onto the hub 1, the arms 10 and/or the barbs 12 provided therein are deformed outwards by the hub 1, the end of the hub being bevelled to assist this. When barbs 12 have become aligned with the V-shaped groove 13 formed in the hub 1, they are able to spring back into their normal positions, *i.e.* projecting radially inwards, and to engage with the groove 13. The arrangement 4 cannot then move in the opposite direction to that shown by arrow 16, *i.e.* off the hub 1, and the arrangement 4 is locked into position relative to the hub 1.

The hub 1 is provided with outwardly extending lugs or trunnions 18 to which the fins are mounted. Each lug 18 has a pivot pin 19 passing through it, the pin 19 also passing through the fin mounted to that lug 18, thereby securing the fin to the lug 18, but also allowing the fin to turn relative to the hub 1. When the spring arrangement is in position on hub 1, each arm 11 lies between the hub 1 and a respective one of the fins with the pivot 19 at about the centre of the arm.

Each fin is shaped so as to define a camming surface 21 in the region around the pivot pin 19, which surface is terminated by an abutment 22.

Referring now in particular to the upper portion of Figure 1 which illustrates the fin 2 in its stowed position, *i.e.* before and during launch of the projectile, the fin 2 is held parallel to the hub axis, *i.e.* with its edge 23 against arm 11 causing the end portion 14 of the arm to be pushed flat against the hub 1. When the fins are released after launch, the spring force in each end portion 14 throws the respective fin outwards away from the hub 1, *i.e.* for fin 2, in the direction of arrow 24. The turning movement of the fin is stopped by edge 25 of the fin coming into contact with the spring arrangement. During the movement, the flap 15 remains held against the hub 1 by the camming surface 21 until the abutment 22 reaches the flap. At this point, the flap 15 is free to spring up and latch with the abutment 22, locking the fin into its deployed position.

The spring arrangement 4 is made from a blank 26 shown in Figure 3. The blank 26 comprises a flat piece of spring steel cut or stamped to define the annular portion 5 with its central hole 6, with the six longer arms 11 and six shorter arms 10 extending radially outwards from the annular portion 5. The arms 10 and 11 are distributed around the whole circumference of the annular portion 5, with the shorter arms alternating with the longer ones. The arms 10 have tongues forming the barbs 12, while the arms 11 have longer tongues, these eventually forming the flaps 15.

The operation of the spring arrangement 4 described above, would not be affected by the direction in which the fins are folded in their stowed position, *i.e.* the arrangement can be used whether the fins are folded forwards or backwards along the projectile. The function of the rotatable hub 1 is to enable the fins to rotate around the body of the projectile. It will be appreciated that the spring arrangement 4 could be adapted for use on a projectile in which the fins are not so free to rotate.

In the illustrated case, the annular portion 5 of the spring arrangement 4 has an additional function as a shield which gives a degree of protection to the bearings for hub 1 against the effects of the high pressure projectile efflux. This protection may be further enhanced by a sealing washer 27 positioned, as shown in Figure 1, between the fixed body part 7 and the annular portion 5 and the hub extension 8. In the described example, the arrangement 4 was made from a steel blank 26, however, any other spring material may be used, *e.g.* phosphor-bronze.

Naturally, the arrangement 4 can be modified to deploy more or less than six fins depending on the projectile in which the arrangement is to be used.

## Claims

1. A fin deployment spring characterised in that it is made from a single piece of spring material (26) and comprises a first portion (10) adapted for being engaged with a body (1) from which a plurality of fins (2, 3) are to be deployed in radial directions, and a plurality of second portions (11) each operable to exert a spring force in a respective direction radially outwards with respect to the first portion for deploying a respective one of said fins.

2. A fin deployment spring according to claim 1, wherein said first portion (10) comprises a plurality of elongate members.

3. A fin deployment spring according to claim 1 or 2 wherein the spring comprises an annular portion (5) from which said first and second portions extend.

4. A fin deployment spring according to claim 1, 2 or 3, wherein a plurality of third portions (12) are provided for exerting spring force in respective radially inward directions on said body while said first portion is engaged therewith.

5. A fin deployment spring according to claim 4, when appended to claim 2 wherein each third portion (12) is formed on a respective one of said elongate members (10).

6. A fin deployment spring according to any preceding claim, including a plurality of fourth portions (15), each fourth portion being operable to extend radially outwards for engaging with a respective one of said fins to maintain deployment of said fin.

7. A fin deployment spring according to claim 6, wherein each fourth portion (15) formed on a respective one of said second portions (11).

8. An integral spring arrangement (4) for mounting on a body (1) which arrangement comprises a plurality of spring portions (11) for erecting a plurality of members from respective stowed positions to respective operating positions radially with respect to said body and for latching said members into their respective operating positions, the spring arrangement further comprising spring portions (10) operable for locking the arrangement into a predetermined radial position on said body.

## Patentansprüche

1. Feder zur Entfaltung von Leitwerksflossen, dadurch gekennzeichnet, daß sie einstückig aus Federmaterial (26) hergestellt ist und einen ersten Abschnitt (10) aufweist, der durch einen Körper (1) beaufschlagt wird, aus dem mehrere Leitwerksflossen (2, 3) in Radialrichtung zu entfalten sind, und daß das Federmaterial (26) außerdem mehrere zweite Abschnitte (11) aufweist, die eine Federkraft in jeweils radialer Richtung gegenüber dem ersten Abschnitt nach außen ausüben um die jeweilige Flosse zu entfalten.

2. Feder zur Entfaltung von Leitwerksflossen nach Anspruch 1, bei welcher der erste Abschnitt (10) mehrere langegestreckte Glieder enthält.

3. Feder zur Entfaltung von Leitwerksflossen nach den Ansprüchen 1 oder 2, bei welcher die Feder einen Ringabschnitt (5) aufweist, von dem der erste und die zweiten Abschnitte vorstehen.

4. Feder zur Entfaltung von Leitwerksflossen nach den Ansprüchen 1, 2 oder 3, bei welcher mehrere dritte Abschnitte (12) vorgesehen sind, um eine Federkraft jeweils radial nach innen auf den Körper auszuüben, während der erste Abschnitt an diesem Körper angreift.

5. Feder zur Entfaltung von Leitwerksflossen nach Anspruch 4, abhängig von Anspruch 2, bei welchem jeder dritte Abschnitt (12) auf jeweils einem der langgestreckten Glieder (10) angeordnet ist.

6. Feder zur Entfaltung von Leitwerksflossen nach einem der vorhergehenden Ansprüche mit mehreren vierten Abschnitten (15), wobei jeder vierte Abschnitt sich radial nach außen erstreckt um an jeweils einer der Flossen anzugreifen um die Flosse in entfalteter Stellung zu halten.

7. Feder zur Entfaltung von Leitwerksflossen nach Anspruch 6, bei welcher jeder vierte Abschnitt (5) auf jeweils einem der zweiten Abschnitte (11) ausgebildet ist.

8. Integrale Federanordnung (4) zur Lagerung eines Körpers (1), bei welcher mehrere Federabschnitte (11) vorgesehen sind, um mehrere Glieder aus der jeweiligen Verstaustellung in die jeweilige Arbeitsstellung gegenüber dem Körper zu überführen und um die Glieder in ihrer jeweiligen Arbeitsstellung zu verriegeln, wobei die Federanordnung außerdem Federabschnitte (10) aufweist, um die Federanordnung in einer vorbestimmten Lage auf dem Körper zu verriegeln.

## Revendications

1. Ressort pour le déploiement d'ailettes, caractérisé en ce qu'il est constitué d'une seule pièce de matériau à ressort (26) et comprend une première partie (10) destinée à venir en contact avec un corps (1) à partir duquel une multitude d'ailettes (2, 3) doivent être déployées dans des directions radiales, et une multitude de secondes parties (11) pouvant fonctionner chacune dans le but d'exercer une force élastique dans la direction radiale respective de l'extérieur par rapport à la première partie afin de déployer une ailette respective parmi les ailettes.

2. Ressort de déploiement d'ailettes selon la revendication 1, dans lequel la première partie (10) comporte une multitude d'éléments allongés.

3. Ressort de déploiement d'ailettes selon la revendication 1 ou la revendication 2, dans lequel le ressort comporte une partie annulaire (5) à partir de laquelle s'étendent la première et la seconde partie.

4. Ressort de déploiement d'ailettes selon la revendication 1, 2 ou 3, dans lequel une multitude de troisièmes parties (12) est prévue pour exercer une force élastique sur le corps dans les directions radiales respectives de l'intérieur alors que la première partie est en contact avec lui.

5. Ressort de déploiement d'ailettes selon la revendication 4, lorsqu'elle dépend de la revendication 2, dans lequel chaque troisième partie (12) est formée sur un élément respectif des éléments allongés (10).

6. Ressort de déploiement d'ailettes selon l'une quelconque des revendications précédentes, comportant une multitude de quatrièmes parties (15), chaque quatrième partie pouvant fonctionner pour s'étendre radialement vers l'extérieur afin de venir en contact avec une ailette respective parmi les ailettes afin de maintenir le déploiement de l'ailette.

7. Ressort de déploiement d'ailettes selon la revendication 6, dans lequel chaque quatrième partie (15) est formée sur une partie respective parmi les secondes parties (11).

8. Agencement intégral à ressort (4) pour montage sur un corps (1), agencement qui comprend une multitude de parties à ressort (11) pour dresser une multitude d'éléments à partir de positions respectives d'arrimage jusqu'à des positions respectives de fonctionnement par rapport au corps et pour déclencher les éléments afin de les mettre dans leurs positions respectives de fonctionnement, l'agencement à ressort comprenant en outre des parties à ressort (10) pouvant fonctionner pour bloquer l'agencement dans une position prédéterminée sur le corps.

Fig.1.

*Fig.2.*

*Fig.3.*